Europäisches Patentamt

European Patent Office

Office européen des brevets

(11) Veröffentlichungsnummer : **0 198 990**
**B1**

## (12) EUROPÄISCHE PATENTSCHRIFT

(45) Veröffentlichungstag der Patentschrift :
28.03.90

(21) Anmeldenummer : 85810181.9

(22) Anmeldetag : 24.04.85

(51) Int. Cl.⁵ : H 02 J   7/04

(54) Verfahren zum Laden eines Ni-Cd oder Ni-Fe Akkumulators und Ladegerät zur Durchführung des Verfahrens.

(43) Veröffentlichungstag der Anmeldung :
29.10.86 Patentblatt 86/44

(45) Bekanntmachung des Hinweises auf die Patenterteilung : 28.03.90 Patentblatt 90/13

(84) Benannte Vertragsstaaten :
AT BE CH DE FR GB IT LI LU NL SE

(56) Entgegenhaltungen :
EP-A- 0 083 492
DE-A- 2 012 614
US-A- 4 385 269
US-A- 4 499 415

(73) Patentinhaber : Glur, Hanspeter
Aeschistrasse 25
CH-3110 Münsingen (CH)

(72) Erfinder : Glur, Hanspeter
Aeschistrasse 25
CH-3110 Münsingen (CH)

(74) Vertreter : Steiner, Martin et al
c/o AMMANN PATENTANWÄLTE AG BERN
Schwarztorstrasse 31
CH-3001 Bern (CH)

EP 0 198 990 B1

## Beschreibung

Die vorliegende Erfindung betrifft ein Verfahren zum Laden eines Ni-Cd oder Ni-Fe Akkumulators nach dem Oberbegriff des Anspruchs 1. Ein Verfahren dieser Art ist aus der US-A-4 499 415 bekannt, bei welchem der Ladevorgang ohne Berücksichtigung der Temperatur des Akkumulators erfolgt. Wie noch erläutert wird, ist aber ein solches Verfahren unbefriedigend.

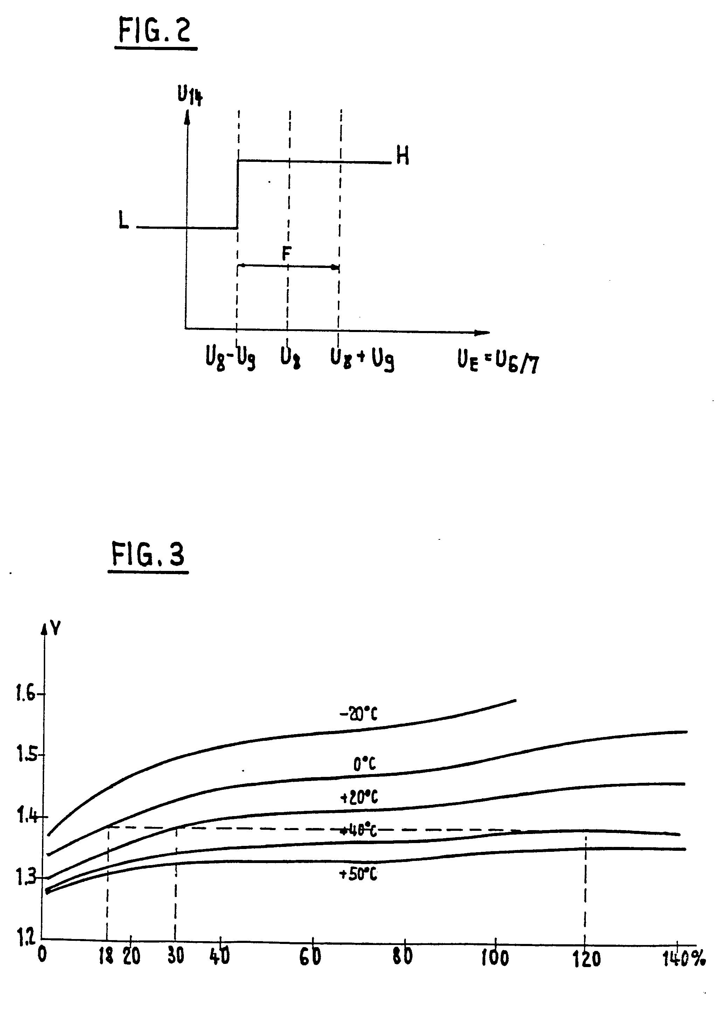

Ni-Cd oder Ni-Fe Akkumulatoren mit dünnen Sinterelektroden vertragen lang andauernde Ueberladung schlecht. Wenn zudem die zulässigen Ströme und Temperaturen überschritten werden, reduziert sich die Lebensdauer auf weniger als ein Jahr, wobei sich die Ladekapazität schon nach einigen Monaten drastisch verringern kann. Es zeigt sich aber, dass bekannte Geräte der oben erwähnten Art trotz der intermittierenden Aufladung und der zwischen den Ladeperioden durchgeführten Ueberprüfung des Ladezustandes des Akkumulators den praktischen Anforderungen nicht genügen. Die Spannung des Akkumulators bei einem bestimmten Ladezustand ist nämlich stark von der Temperatur desselben abhängig (Fig. 3). Da andererseits ein stark entladener Akkumulator sich bei Aufladung mit einem relativ grossen Ladestrom erheblich erwärmt, genügt der Vergleich der Akkumulatorspannung mit einer fest vorgegebenen Referenzspannung gemäss US-A-4 449 415 nicht zur Ermittlung seines Ladezustandes, was dazu führt, dass der Akkumulator entweder überladen wird, was sich auf seine Lebensdauer sehr nachteilig auswirkt, oder aber ungenügend aufgeladen wird.

Aus der US-A-4 385 269 ist zwar ein Ladeverfahren für Akkumulatoren bekannt, bei welchem in Funktion der Akkumulatortemperatur der mittlere Ladestrom im wesentlichen konstant gehalten wird. Diese Massnahme ist jedoch auch nicht geeignet, die oben erwähnten Nachteile zu vermeiden.

Ziel der Erfindung ist es nun, ein schnelles und zugleich schonendes und vollständiges Aufladen eines Ni-Cd oder eines Ni-Fe Akkumulators zu ermöglichen. Dieses Ziel wird gemäss Kennzeichen des Anspruchs 1 erreicht.

Die Erfindung betrifft auch ein Ladegerät zur Durchführung des erfindungsgemässen Verfahrens, gemäss Anspruch 6.

Die Erfassung der Temperatur des Akkumulators erfolgt vorzugsweise mittels eines unmittelbar beim Akkumulator eingebauten, temperaturabhängigen Widerstandes. Vorzugsweise zeigen Leuchtdioden den Betriebszustand wie « Laden », « Prüfen », « Störung » sowie den einwandfreien Anschluss der Federkontaktstifte am Akkumulator an.

Im folgenden wird die Erfindung anhand eines in der Zeichnung dargestellten Ausführungsbeispiels näher erläutert.

Fig. 1 zeigt das Schaltbild einer bevorzugten Ausführungsart der des erfindungsgemässen Ladegerätes,

Fig. 2 zeigt ein Diagramm, das die Wirkungsweise eines Fensterdiskriminators erläutert, und

Fig. 3 zeigt ein Diagramm der Zellenspannung in Funktion der Einladekapazität bei verschiedener Temperaturen.

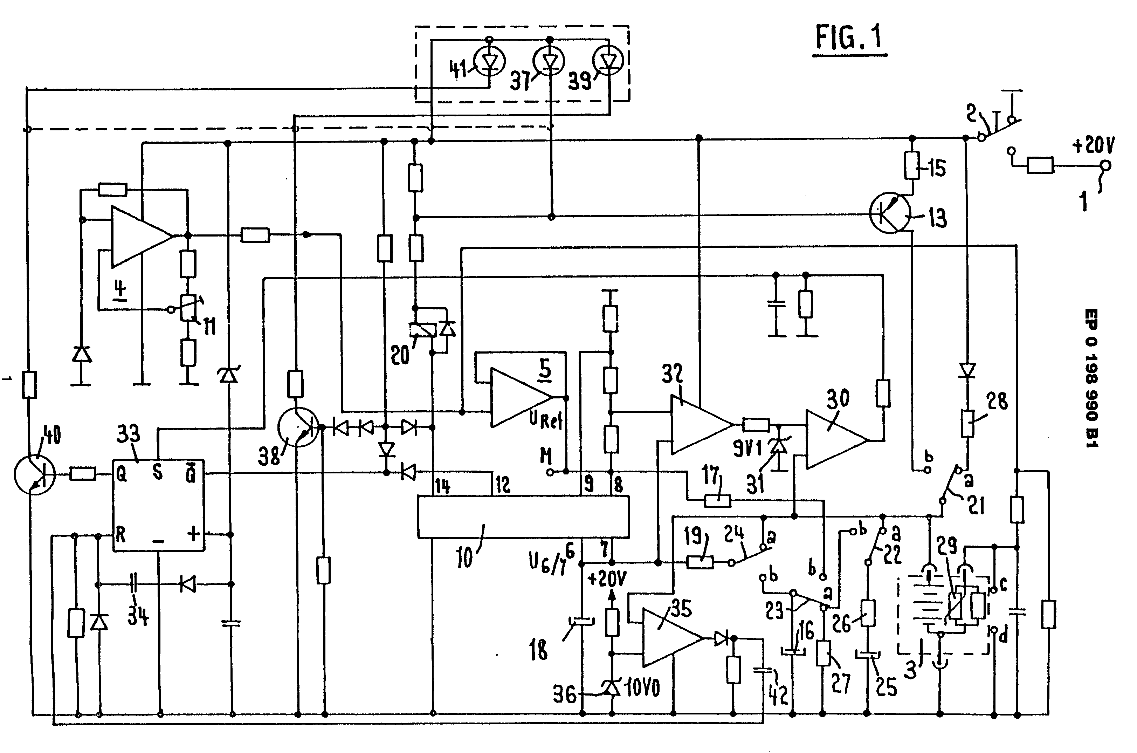

Die Schaltung von Figur 1 wird durch eine nicht dargestellte, spannungsstabilisierte Energiequelle gespeist, welche den Ladestrom zum Laden eines Akkumulators 3 liefern kann und an der Klemme 1 angeschlossen ist.

Wenn das Ladegerät gleichzeitig zum Laden von mehreren Akkumulatoren vorgesehen ist, werden einzelne Akkumulatoren je über einen Schalter 2 angeschlossen, wobei das Einsetzen eines Akkumulators den entsprechenden Schalter betätigt. Ein Referenzspannungsgenerator 4 liefert über eine Folgeschaltung 5 eine Referenzspannung $U_{Ref}$ an der Klemme M, welche mit einem Eingang 8 eines Fensterdiskriminators 10 (z. B. TCA 965) verbunden ist. Die Referenzspannung kann mit Hilfe eines Potentiometers 11 in Funktion der Akkumulatorspannung, d. h. der Anzahl Zellen des Akkumulators, eingestellt werden.

In Figur 2 ist die Wirkungsweise des Fensterdiskriminators 10 dargestellt. Die obere und die untere Fensterkanten sind durch die Spannungen U8 + U9, bzw. U8-U9 bestimmt, die an den Eingängen 8 und 9 durch einen Spannungsteiler geliefert werden. Die Spannung U8, die gleich der Referenzspannung $U_{Ref}$ ist, entspricht der Fenstermitte. Die zu vergleichende Spannung U6/7 wird an den gemeinsamen Klemmen 6 und 7 des Fensterdiskriminators angelegt. Figur 2 zeigt, dass wenn die Spannung U6/7 die untere Fensterkante überschreitet, der Ausgang 14 des Fensterdiskriminators von « L » zu « H » schaltet. Umgekehrt, wenn die Spannung U6/7 die untere Fensterkante unterschreitet, schaltet der Ausgang 14 von « H » zu « L ». Während der Prüfphase entspricht U6/7 der Akkumulatorspannung. Die Referenzspannung $U_{Ref}$ ist so gewählt, dass sie um 10 % höher ist als die Endladespannung des Akkumulators 3. Der Ausgang 14 des Fensterdiskriminators 10 steuert ein Relais 20, welches im abgefallenen Zustand (Ausgang 14 auf « H »), die Prüfphase und im angezogenen Zustand (Ausgang 14 auf « L ») die Ladephase des Akkumulators bestimmt. Das Relais 20 weist die Umschaltkontakte 21, 22, 23, und 24 auf. Diese Umschaltkontakte sind bei der Prüfphase in der Stellung «.a » und bei der Ladephase in der Stellung « b ».

Bei der Ladephase ist, wie erwähnt, das Relais 20 im angezogenen Zustand und die Umschaltkontakte in der Stellung « b ». Der Transistor 13 liefert dann einen Ladestrom über den Kontakt 21 an den Akkumulator. Der Ladestrom beträgt z. B. 380 mA für einen Akkumulator mit einer Kapazität von 450 mAh. Die Grösse dieses Ladestromes ist durch den Widerstand 15 bestimmt. Während der Ladephase lädt die Referenzspannung den Kondensator 16 über den Widerstand 17 auf. Die Zeitkonstante R17C16 kann so gewählt werden, dass die Ladephase z. B. zwischen 5 Sekunden und 15 Minuten dauert. Die Spannung am Kondensator 16 wird über das RC-Glied 18, 19 am Messeingang 6/7 des Fensterdiskriminators 10 angelegt und die Ladephase endet, wenn die untere Fensterkante durch die Spannung U6/7 überschritten wird, wobei der Ausgang 14 des Fensterdiskriminators von « L » auf « H » schaltet und das Abfallen des Relais 20 verursacht. Die Schaltung befindet sich dann in der Prüfphase. Die Umschaltkontakte 21-24 sind nun in der dargestellten Stellung « a ». Am Anfang der Prüfphase wird der Kondensator 25 über den Widerstand 26 geladen, wodurch dem Akkumulator 3 eine relativ grosse Entladestromspitze entzogen wird. Beträgt z. B. die Kapazität des Akkumulators 450 mAh, wird eine Entladestromspitze von z. B. 475 mA dem Akkumulator entzogen. Am Ende der Ladephase, bzw. am Anfang der Prüfphase liegt die Spannung U6/7 am Messeingang des Fensterdiskriminators 10 über der unteren Fensterkante. Die Akkumulatorspannung wird über den Kontakt 24 und den Widerstand 19 am Messeingang des Fensterdiskriminators angelegt. Ist die Akkumulatorspannung infolge des Entladestromes kleiner als die untere Fensterkante, wird sofort auf Laden umgeschaltet und eine neue Ladephase beginnt. Während der Prüfphase, die z. B. nur 50 ms betragen kann, wird der Kondensator 16 über den Widerstand 27 entladen. Ist die Akkumulatorspannung höher als die untere Fensterkante, bleibt die Prüfphase bestehen : Das Laden des Akkumulators ist beendet.

Gleichzeitig erhält der Akkumulator einen Erhaltungsstrom von etwa 14 mA über den Widerstand 28. Voll entladene Akkumulatoren erreichen bald den nominellen Spannungswert, jedoch ohne Kapazität. Während der Prüfphase wird in diesem Falle durch den kurzzeitigen Stromentzug die untere Fensterkante unterschritten und eine neue Ladephase beginnt, wie oben beschrieben. Unterschreitet die Akkumulatorspannung durch starke Selbstentladung die untere Fensterkante, so beginnt auch wieder eine neue Ladephase. Während der Ladephase wird der Kondensator 25 über die Widerstände 26 und 27 entladen.

Das Ladegerät enthält eine Temperaturregelung der Referenzspannung $U_{Ref} = U8$, d. h. damit auch der unteren Fensterkante U8-U9 des Fensterdiskriminators 10 in Funktion der Akkumulatortemperatur. Dabei wird proportional der temperaturabhängigen Akkumulator-Endladespannung die untere Fensterkante in der richtigen Richtung verschoben. Durch den relativ grossen Ladestrom von z. B. 380 mA erhitzt sich ein stark entladener Akkumulator schnell bis auf 40 °C. Figur 3 zeigt, dass ein Akkumulator mit 40 °C Innentemperatur und einer Einladekapazität von 120 % die maximale Zellenspannung von ca. 1,385 Volt erreicht. Bei einem Akkumulator mit 20 °C Innentemperatur entspricht diese Zellenspannung einer Einladekapazität von nur 30 % und bei 0 °C Innentemperatur nur noch 18 %. Aus diesem Grunde ist eine Temperaturkompensation erforderlich. Für die Temperaturregelung ist ein Widerstand mit negativem Temperaturkoeffizienten 29 unmittelbar neben dem Akkumulator vorgesehen. Durch diesen Widerstand 29 wird die Eingangsspannung der Folgeschaltung 5 so eingestellt, dass die Referenzspannung bei sinkender Temperatur des Akkumulators nach oben verschoben wird. Es ist einzusehen, dass ein Hilfswiderstand an die Klemmen c und d parallel zum Widerstand 29 angeschlossen werden kann, um die Referenzspannung bei 20 °C genau einzustellen.

Die Schaltung funktioniert im Bereiche von 0 °C bis 50 °C. Es ist jedoch damit zu rechnen, dass die Innentemperatur eines Akkumulators, der sich längere Zeit in der Prüfphase befindet und welcher den Erhaltungsstrom von ca. 14 mA erhält, nicht unter 15 °C fällt. Es kann bei stark erhitztem Akkumulator vorkommen, dass durch die Temperaturregelung die Endladespannung erreicht wird, und dass die Prüfphase beginnt. Wird nun durch den Unterbruch des Ladestromes der Akkumulator abgekühlt, verschiebt sich die untere Fensterkante U6/7 nach oben. Die Akkumulatorspannung liegt dadurch unterhalb der Fensterkante und es beginnen wieder neue Ladephasen wie oben beschrieben. Diese Reihenfolge kann sich zwei- bis dreimal wiederholen, bis der Akkumulator seine 100 prozentige Endladespannung bei einer gegebenen Umgebungstemperatur erreicht hat.

Das Ladegerät enthält ferner eine Störschaltung mit Rücksetzautomatik. Die Spannung eines Akkumulators mit einer defekten Zelle erreicht am Ende der ersten Ladephase eine Spannung von 9,1 Volt nicht, welche Spannung einem minimalen Laden des Akkumulators entspricht. Somit ist ein Weiterladen sinnlos. Ein Komparator 30 erhält die Akkumulatorspannung und vergleicht sie mit einer Schwellenspannung von 9,1 Volt, welche durch eine Zenerdiode 31 geliefert wird. Kurz vor Beendigung der Ladephase, liefert ein Komparator 32 den Betriebstrom für die Zenerdiode 31. Danach prüft der Komparator 30 die Akkumulatorspannung und setzt im Falle eines defekten Akkumulators den Störungsspeicher 33 (Flip-Flop) dessen Q-Ausgang auf « L » geht und über den Inhibit-Eingang 12 des Fensterdiskriminators 10 die Ladephase blockiert. Die Störungsmeldung wird solange gespeichert bis der defekte Akkumulator aus dem Ladegerät entfernt wird. Beim Einsetzen eines neuen Akkumulators wird der Flip-Flop 33 über den Kondensator 34 zurückgesetzt. Wird ein voll entladener Akkumulator ins Ladegerät eingesetzt, ist es möglich, dass die Spannung von 9,1 Volt kurz vor der Beendigung der ersten Ladephase nicht erreicht wird, obwohl der Akkumulator keinen Defekt aufweist. Die Störschaltung spricht an und der Ladestrom (z. B. 380 mA) wird unterbrochen. Der Akkumulator erhält aber den Erhaltungsstrom von ca. 14 mA und er lädt sich langsam auf. Die Akkumulatorspannung wird dann durch den Komparator 35 mit einer Schwellenspannung von ca. 10 Volt, welche durch eine Zenerdiode 36 geliefert wird, verglichen. Erreicht die Akkumulatorspannung die 10 Volt-Schwellenspannung, so schaltet der Ausgang des Komparators 35 auf « H » und der Flip-Flop 33 wird über den Kondensator 42 zurückgesetzt. Eine neue Ladephase mit dem vollen Ladestrom kann beginnen.

Das Ladegerät enthält auch Betriebsarten-Anzeigen. Beim Laden fliesst ein konstanter Ladestrom, welcher durch den Widerstand 15 bestimmt wird, über den Transistor 13 in den Akkumulator. Der Basisstrom des Transistors 13 fliesst zum Relais 20. Der Spannungsabfall über den Widerstand 15 reicht aus um die LED-Anzeige 37 zum Leuchten zu bringen. Ist der Ladestrom durch schlechten Kontakt am Akkumulatoranschluss zu klein oder unterbrochen, entsteht am Widerstand 15 nur noch ein kleiner oder kein Spannungsabfall, und die LED-Anzeige 37 leuchtet nicht. Die Schaltung erlaubt somit den Zustand der Kontakte am Akkumulatoranschluss, zu prüfen.

Während der Prüfphase, befindet sich der Ausgang 14 des Fensterdiskriminators auf « H ». Dadurch wird der Transistor 38 über Dioden leitend gemacht und die LED-Anzeige 39 leuchtet. Ist aber der Ausgang Q des Flip-Flops 33 auf « L » (Störung), so bleibt der Transistor 38 gesperrt und die LED-Anzeige 39 leuchtet nicht.

Im Falle einer Störung schaltet der Ausgang Q des Flip-Flops 33 auf « H ». Der Transistor 40 wird dadurch leitend und die LED-Anzeige 41 leuchtet. Diese Led-Anzeige 41 zeigt somit eine Störung an.

Wie oben erwähnt, ist der Ladestrom durch den Widerstand 15 bestimmt. Im Normalbetriebsfall kann dieser Ladestrom durch diesen Widerstand zwischen 5 und 150 % des Stromes, welcher der Nennkapazität des Akkumulators entspricht, eingestellt werden, d. h., dass bei einem Akkumulator mit einer Nennkapazität von z. B. 800 mAh, der Ladestrom 40 mA bis 1 200 mA betragen würde. Ebenfalls kann durch das RC-Glied R26C25 der Prüfentladestrom zwischen 5 und 150 % des Stromes, welcher der Nennkapazität des Akkumulators entspricht, eingestellt werden.

Im Falle wo Explosionsgefahr besteht, kann auch das Relais 20 durch eine vollelektronische Schaltung ohne mechanische Kontakte, ersetzt werden.

## Patentansprüche

1. Verfahren zum Laden eines Ni-Cd oder Ni-Fe Akkumulators (3), wobei dem Akkumulator (3) intermittierend ein Ladestrom zugeführt und jeweils während des Ladeunterbruchs der Ladezustand des Akkumulators (3) durch Vergleich der Spannung des durch einen Entladestrom belasteten Akkumulators (3) mit einer ersten Schwellenspannung (U8-U9), welche der Spannung des voll geladenen Akkumulators (3) entspricht, geprüft und das Laden endgültig beendet wird, wenn die Akkumulatorspannung die erste Schwellenspannung (U8-U9) dauernd überschreitet, dadurch gekennzeichnet, dass die erste Schwellenspannung (U8-U9) in Funktion der Temperatur des Akkumulators (3) geregelt wird, um die erste Schwellenspannung (U8-U9) an die Akkumulatorspannung bei der im Akkumulator (3) herrschenden Temperatur anzupassen.

2. Verfahren nach Anspruch 1, dadurch gekennzeichnet, dass die erste Schwellenspannung (U8-U9) mittels eines unmittelbar beim Akkumulator (3) eingebauten Widerstandes (29) mit negativem Temperaturkoeffizienten geregelt wird, und dass der Spannungsvergleich mit der ersten Schwellenspannung (U8-U9) bei ausgeschaltetem Ladestrom vorgenommen wird.

3. Verfahren nach Anspruch 1 oder 2, dadurch gekennzeichnet, dass der Entladestrom des Akkumulators (3) durch das Laden eines Kondensators (25) über einen Widerstand (26) verursacht wird.

4. Verfahren nach Anspruch 1, dadurch gekennzeichnet, dass jeweils kurz vor Beendigung einer Ladephase die Akkumulatorspannung mit einer zweiten Schwellenspannung, welche einem minimalen Ladezustand des Akkumulators (3) entspricht, verglichen wird, wobei, wenn die Akkumulatorspannung unterhalb dieser zweiten Schwellenspannung liegt, der Ladestrom unterbrochen wird und ein Erhaltungsstrom, der kleiner ist als der normale Ladestrom, dem Akkumulator (3) zugeführt wird, so dass der Akkumulator (3) weiter geladen wird bis die Akkumulatorspannung eine dritte Schwellenspannung, die höher ist als die zweite Schwellenspannung, erreicht, wonach der normale Ladestrom in einer neuen Ladephase dem Akkumulator (3) zugeführt wird.

5. Verfahren nach Anspruch 1, dadurch gekennzeichnet, dass der Ladezustand, der Prüfzustand und ein Störungszustand im Falle eines defekten Akkumulators (3) je durch einen Indikator (37, 39, 41) angezeigt werden.

6. Ladegerät zur Durchführung des Verfahrens nach Anspruch 1, mit einer Referenzspannungsquelle (4, 5), welche mit einer Vergleichsschaltung (10) verbunden ist, wobei die Vergleichsschaltung (10) einen Schaltkreis (20) steuert, welcher intermittierend das Laden des Akkumulators (3) und das Prüfen des Ladezustandes des mit einem Entladestrom belasteten Akkumulators (3) durch Vergleich der Akkumulatorspannung mit einer ersten, mit der Referenzspannung (U_Ref) verknüpften Schwellenspannung (U8-U9), welche einem minimalen Ladezustand des Akkumulators (3) entspricht, erlaubt, dadurch gekennzeichnet, dass die Vergleichsschaltung als Fensterdiskriminator (10) ausgeführt ist und dass ein Widerstand (29) mit negativem Temperaturkoeffizienten unmittelbar beim Akkumulator (3) eingebaut ist, welcher Widerstand (29) so auf die Referenzspannungsquelle (4, 5) wirkt, dass die Referenzspannung (U_Ref) immer der Temperatur des Akkumulators (3) angepasst wird.

7. Ladegerät nach Anspruch 6, dadurch gekennzeichnet, dass die Referenzspannung (U_Ref) und eine Hilfsspannung (U9) die Breite des Fensters des Fensterdiskriminators (10) bestimmen, wobei die erste Schwellenspannung der unteren Fensterkante (U8-U9) entspricht, und dass die Dauer der Ladephase durch eine RC-Schaltung (16, 17) bestimmt ist, welche durch die Referenzspannung ($U_{Ref}$) gespeist wird und mit einem Messeingang (6/7) des Fensterdiskriminators (10) verbunden ist, wobei die Ladephase beendet ist, wenn die durch die RC-Schaltung (16, 17) am Messeingang (6/7) gelieferte Spannung die erste Schwellenspannung (U8-U9) erreicht, wonach ein Ausgang (14) des Fensterdiskriminators (10) den Schaltkreis (20) so steuert, dass der Ladezustand des Akkumulators (3) geprüft wird.

8. Ladegerät nach Anspruch 7, dadurch gekennzeichnet, dass ein erster Komparator (30) vorgesehen ist, der die Akkumulatorspannung mit einer zweiten Schwellenspannung, welche einem minimalen Ladezustand des Akkumulators (3) entspricht, kurz vor der Beendigung der Ladephase vergleicht, wobei im Falle einer Akkumulatorspannung unterhalb dieser zweiten Schwellenspannung der Komparator (30) einen Flip-Flop (33) setzt, dessen eine Ausgang (Q) mit einem Inhibit-Eingang (12) des Fensterdiskriminators (10) verbunden ist, um die Ladephase zu blockieren.

9. Ladegerät nach Anspruch 8, dadurch gekennzeichnet, dass ein Erhaltungsstromkreis (28) vorgesehen ist, über welchen der Akkumulator (3) dessen Spannung kleiner ist als die zweite Schwellenspannung einen Erhaltungsstrom, welcher kleiner ist als der normale Ladestrom, erhält, durch welchen er langsam geladen wird, wobei ein zweiter Komparator (35) zum Vergleich der Akkumulatorspannung mit einer dritten Schwellenspannung (36) vorgesehen ist, wobei im Falle einer Akkumulatorspannung über der dritten Schwellenspannung der zweite Komparator (35) den Flip-Flop (33) zurücksetzt, um eine neue Ladephase einzuleiten.

10. Ladegerät nach Anspruch 6, dadurch gekennzeichnet, dass es Anzeigen (37, 39, 41) aufweist, um den Ladezustand, den Prüfzustand und einen Störungszustand, welcher einem defekten Akkumulator (3) entspricht, anzuzeigen.

**Claims**

1. Method for charging a Ni-Cd or a Ni-Fe accumulator (3) wherein the accumulator (3) is intermittently supplied with a charging current, and the charge of the accumulator (3) is tested by comparing the voltage of the accumulator (3) under the load of a discharging current, to a first threshold voltage (U8-U9) which corresponds to the fully charged accumulator's (3) voltage, during each charging intermission, and wherein charging is ended when the accumulator voltage exceeds the first threshold voltage (U8-U9) permanently, characterized in that the first threshold voltage (U8-U9) is controlled as a function of the temperature of the accumulator (3) in order to adapt the first threshold voltage (U8-U9) to the accumulator voltage at the temperature prevailing in the accumulator (3).

2. Method according to claim 1, characterized in that the first threshold voltage (U8-U9) is controlled by means of a negative temperature coefficient resistance (29) which is built in directly next to the accumulator (3), and in that the voltage comparison with the first threshold voltage (U8-U9) is effected while the charging current is switched off.

3. Method according to claim 1 or 2, characterized in that the discharging current of the accumulator (3) is caused by charging a capacitor (25) via a resistance (26).

4. Method according to claim 1, characterized in that the accumulator voltage is compared, shortly before the end of each charging phase, to a second threshold voltage which corresponds to a minimum charge of the accumulator (3), the charging current being interrupted if the accumulator voltage is below said second threshold voltage and the accumulator being supplied with a conservation current which is smaller than the normal charging current, so that the accumulator (3) is further charged until the accumulator voltage has attained a third threshold voltage which is higher that the second threshold voltage, after which the accumulator (3) is supplied with the normal charging current in a new charging phase.

5. Method according to claim 1, characterized in that the charging mode, the test mode, and a defect mode in the case of a defective accumulator (3), are indicated by an indicator (37, 39, 41) each.

6. Charger for performing the method according to claim 1, comprising a reference voltage source (4, 5) which is connected to a comparator circuit (10), said comparator controlling a circuit (20) which allows intermittently charging the accumulator (3) and testing the charge of the accumulator (3) under the load of a discharging current by comparison of the accumulator voltage with a first threshold voltage (U8-U9) being in relation with the reference voltage ($U_{Ref}$) and which corresponds to a minimum charge of the accumulator (3), characterized in that the comparator circuit is realized as a window discriminator (10) and in that a negative temperature coefficient resistance (29) is built in directly next to the accumulator (3), which resistance (29) influences the reference voltage source (4, 5) in such a manner that the reference voltage ($U_{Ref}$) is always adapted to the temperature of the accumulator (3).

7. Charger according to claim 6, characterized in that the reference voltage ($U_{Ref}$) and an auxiliary voltage (U9) determine the window width of the window discriminator (10), the first threshold voltage corresponding to the lower window edge (U8-U9), and in that the duration of the charging phase is determined by an RC circuit (16, 17) which is supplied by the reference voltage ($U_{Ref}$) and connected to a measuring input (6/7) of the window discriminator (10), the charging phase being ended when the voltage fed to said measuring input (6/7) by the RC circuit (16, 17) attains the first threshold voltage (U8-U9), after which an output (14) of the window discriminator (10) controls the circuit (20) in such a manner that the charge of the accumulator (3) is tested.

8. Charger according to claim 7, characterized in that a first comparator (30) is provided, which compares the accumulator voltage with a second threshold voltage corresponding to a minimum charge of the accumulator (3) shortly before the end of the charging phase, said comparator (30) setting a flip-flop (33) in the case of an accumulator voltage below this second threshold voltage, one output of which (Q) is connected to an inhibit input (12) of the window discriminator in order to block the charging phase.

9. Charger according to claim 8, characterized in that a conservation current circuit (28) is provided, by which the accumulator (3), the voltage of which is smaller than the second threshold voltage, is supplied with a conservation current which is smaller than the normal charging current, by which it is slowly charged, a second comparator (35) for comparison of the accumulator voltage to a third threshold voltage (36) being provided, the second comparator (35) setting the flip-flop (33) back in the case of an accumulator voltage exceeding the third threshold voltage in order to initiate a new charging phase.

10. Charger according to claim 6, characterized in that it has displays (37, 39, 41) to display the charging mode, the test mode and a defect mode which corresponds to a defective accumulator (3).


**Revendications**

1. Procédé pour charger un accumulateur (3) Ni-Cd ou Ni-Fe, l'accumulateur (3) étant alimenté, de façon intermittente, par un courant de charge et l'état de charge de l'accumulateur (3) étant vérifié, pendant chaque interruption du chargement, par comparaison de la tension de l'accumulateur (3) sous la charge d'un courant déchargeant, avec une première tension-seuil (U8-U9) qui correspond à la tension de l'accumulateur (3) entièrement chargé et le chargement étant terminé définitivement quand la tension de l'accumulateur dépasse la première tension-seuil (U8-U9) en permanence, caractérisé en ce que la première tension-seuil (U8-U9) est commandée en fonction de la température de l'accumulateur (3), de façon à adapter la première tension-seuil (U8-U9) à la tension de l'accumulateur par rapport à la température existant dans l'accumulateur (3).

2. Procédé selon la revendication 1, caractérisé en ce que la première tension-seuil (U8-U9) est commandée au moyen d'une résistance à coefficient de température négatif (29), montée à proximité immédiate de l'accumulateur (3), et que la comparaison de tension avec la première tension-seuil (U8-U9) est effectuée, le courant de charge étant coupé.

3. Procédé selon la revendication 1 ou 2, caractérisé en ce que le courant de décharge de l'accumulateur (3) est occasionné par le chargement d'un condensateur (25) par le biais d'une résistance (26).

4. Procédé selon la revendication 1, caractérisé en ce que la tension de l'accumulateur est chaque fois comparée, peu avant la fin d'une phase de chargement, avec une seconde tension-seuil qui correspond à une charge minimale de l'accumulateur (3), le courant de charge étant interrompu si la tension de l'accumulateur se trouve en dessous de cette seconde tension-seuil, et l'accumulateur (3) étant alimenté par un courant de conservation, qui est plus faible que le courant de charge normal, de façon que l'accumulateur (3) continue d'être chargé jusqu'à ce que la tension de l'accumulateur atteigne une troisième tension-seuil qui est supérieure à la seconde tension-seuil, après quoi l'accumulateur (3) est alimenté, lors d'une nouvelle phase de chargement, par le courant de charge normal.

5. Procédé selon la revendication 1, caractérisé en ce que l'état de chargement, l'état de vérification et un état de défaut, dans le cas d'un accumulateur (3) défectueux, sont chacun indiqués par un indicateur (37, 39, 41).

6. Chargeur pour la réalisation du procédé selon la revendication 1, comprenant une source de tension-référence (4, 5) qui est reliée avec un circuit comparateur (10), le circuit comparateur (10) commandant un circuit (20) qui permet, par intermittence, le chargement de l'accumulateur (3) et la vérification de l'état de charge de l'accumulateur (3) sous la charge d'un courant de décharge, par comparaison de la tension de l'accumulateur avec une première tension-seuil (U8-U9) liée à la tension-référence (U$_{Ref}$), qui correspond à une charge minimale de l'accumulateur (3), caractérisé en ce que le circuit comparateur est exécuté en tant que discriminateur à fenêtre (10) et qu'une résistance à coefficient de température négatif (29) est montée à proximité immédiate de l'accumulateur (3), résistance (29) qui agit de telle façon sur la source de tension-référence (4, 5) que la tension-référence (U$_{Ref}$) est constamment adaptée à la température de l'accumulateur (3).

7. Chargeur selon la revendication 6, caractérisé en ce que la tension-référence (U$_{Ref}$) et une tension auxiliaire (U9) déterminent la largeur de la fenêtre du discriminateur à fenêtre (10), la première tension-seuil correspondant au bord inférieur de la fenêtre (U8-U9), et que la durée de la phase de chargement est déterminée par un circuit RC (16, 17) qui est alimenté par la tension-référence (U$_{Ref}$) et relié à une entrée de mesure (6/7) du discriminateur à fenêtre (10), la phase de chargement étant terminée quand la tension fournie par le circuit RC (16, 17) à l'entrée de mesure (6/7) atteint la première tension-seuil (U8-U9), après quoi une sortie (14) du discriminateur à fenêtre (10) commande le circuit (20) de telle manière que l'état de charge de l'accumulateur (3) est vérifié.

8. Chargeur selon la revendication 7, caractérisé en ce qu'on prévoit un premier comparateur (30), qui compare la tension de l'accumulateur avec une deuxième tension-seuil correspondant à une charge minimale de l'accumulateur (3) peu avant la fin de la phase de chargement, le comparateur (30) enclenchant une bascule (33) au cas d'une tension d'accumulateur en dessous de cette seconde tension-seuil, bascule dont l'une des sorties (Q) est reliée à l'entrée inhibit (12) du discriminateur à fenêtre pour bloquer la phase de chargement.

9. Chargeur selon la revendication 8, caractérisé en ce qu'un circuit de conservation (28) est prévu, par lequel l'accumulateur (3) dont la tension est inférieure à la seconde tension-seuil reçoit un courant qui est plus faible que le courant de charge normal et par lequel il est chargé lentement, un deuxième comparateur (35) étant prévu afin de comparer la tension de l'accumulateur avec une troisième tension-seuil (36), le deuxième comparateur (35) redéclenchant la bascule (33) au cas d'une tension de l'accumulateur supérieure à la troisième tension-seuil pour initier une nouvelle phase de chargement.

10. Chargeur selon la revendication 6, caractérisé en ce qu'il présente des indicateurs (37, 39, 41) pour indiquer l'état de chargement, l'état de vérification et un état de défaut qui correspond à un accumulateur défectueux.

**FIG.1**

## FIG. 2

## FIG. 3